# EUROPÄISCHE PATENTANMELDUNG

(11) **EP 3 835 958 A1**
(43) Veröffentlichungstag der Anmeldung: **16.06.2021**
(21) Anmeldenummer: 19214723.9
(22) Anmeldetag: 10.12.2019
(51) Int. Cl.: G06F 9/54, G05B 19/04

(54) **VERFAHREN UND VORRICHTUNG ZUR ANSTEUERUNG EINES IOT-GERÄTS DURCH EINEN PROGRAMMCODE**

(71) Anmelder: Siemens Aktiengesellschaft, 80333 München (DE)
(72) Erfinder: Li, Fei, 1220 Wien (AT); Bossy, Thierry, 1203 Geneva (CH); Geiger, Sebastian, 1050 Wien (AT)
(74) Vertreter: Maier, Daniel Oliver

(57) **Zusammenfassung**

Verfahren zur Ansteuerung eines IoT-Geräts (10) durch einen Programmcode, wobei ein Ausführungsdatensatz, welcher auf Anwendungs- und Geräte-Parametern basiert, für das IoT-Gerät (10) von einer Ausführungsvorrichtung mit einem Ausführungsspeicher erzeugt wird und, eine Verifikations- und Simulationsumgebung (100) für das IoT-Gerät (10) mithilfe des Ausführungsdatensatzes von einer Ausführungsvorrichtung erzeugt wird, und zumindest ein Anwendungsprogramm und zumindest ein Konfigurationsdatensatz aus einer Menge an Applikationsdaten, welche in einer Applikations-Datenbank (150) gespeichert sind, mithilfe des Ausführungsdatensatzes von der Ausführungsvorrichtung ermittelt und aus der Applikations-Datenbank (150) ausgelesen werden, in die Verifikations- und Simulationsumgebung (100) eingebettet und miteinander verknüpft werden, wodurch der Programmcode erzeugt wird, und der Programmcode von der Verifikations- und Simulationsumgebung (100) ausgeführt wird, an eine Geräte-Plattform (200) übermittelt wird, von dieser ausgeführt wird und das IoT-Gerät (10) mit dem Programmcode angesteuert wird.

## Beschreibung

Die Erfindung betrifft ein Verfahren und eine Vorrichtung zur Ansteuerung eines IoT-Geräts durch einen Programmcode.

Industrielle Automatisierungslösungen werden normalerweise von Integratoren entwickelt. Sie konfigurieren IT-Infrastruktur und Automatisierungssoftware wie SCADA und entwickeln Anwendungen für bestimmte Produkte oder Produktlinien. Die entstandenen Lösungen werden in der Regel auf Hardwaregeräten bereitgestellt, die Endkunden gehören, und sollten nach der Inbetriebnahme während ihrer Lebensdauer keine wesentlichen Änderungen erfahren.

Die Digitalisierung und das Streben nach Produktionsflexibilität stellen jedoch den traditionellen Engineering-Ansatz in Frage. Einerseits verlagern Hersteller schrittweise Automatisierungssysteme in die Cloud, was Vorteile niedriger Investitionskosten und hoher Skalierbarkeit bietet. Die lokalen Umgebungen mit ihren Leistungs- und Sicherheitsanforderungen bleiben jedoch erhalten, sodass bestimmte Automatisierungsfunktionen weiterhin vor Ort ausgeführt werden können. Diese "on-premise"-Umgebungen werden auch als Edge bezeichnet. In diesen aufkommenden Laufzeitumgebungen über Cloud und Edge hinweg müssen sich die Integratoren mit heterogeneren und weniger transparenten IT-Infrastrukturen befassen, da diese nicht mehr ausschließlich von den Endkunden selbst verwaltet werden. Andererseits stellt die Flexibilität der Produktion die architektonische Stabilität von Automatisierungslösungen in Frage, die während ihrer Lebensdauer für mehrere Produkte oder Produktlinien neu konfiguriert und sogar für andere Zwecke verwendet werden können. Manche Automatisierungsplattformen entwickeln sich von monolithischen Plattformen zu Ökosystemen kleiner unabhängiger Anwendungen, die die Kunden nur für die Dauer einer bestimmten Produktion auswählen und verwenden können.

Der traditionelle Engineering-Prozess, der durch die Schritte Hardware-Installation, Netzwerkkonfiguration, Anwendungsentwicklung, Softwareinstallation und -konfiguration maßgeschneiderte Lösungen liefert, erfüllt die genannten Anforderungen der industriellen Automatisierung nicht mehr.

Die Anzahl an möglichen Programmcodes und deren Konfiguration für eine gewünschte Gerätekonfiguration ist eine sehr komplexe Aufgabe mit sehr vielen möglichen Permutationen von Funktionen und Eigenschaften für ein, mit einer Geräte-Plattform verbundenes IoT-Endgerät.

Es ist Aufgabe der Erfindung ein Verfahren und eine Vorrichtung bereitzustellen, welche die Zusammenstellung, die Konfiguration, die Verteilung und den Betrieb eines oder mehrerer Anwendungsprogramme für ein IoT-Gerät mittels einer Geräte-Plattform in einer effizienten Weise erleichtert.

Außerdem ist es eine Aufgabe der Erfindung die automatische Integration von Abhängigkeiten zwischen Anwendungsprogrammen zu verbessern beziehungsweise vorzusehen.

Die erfindungsgemäße Aufgabe wird durch ein Verfahren eingangs genannter Art gelöst, wobei ein Ausführungsdatensatz, welche auf Anwendungs- und Geräte-Parametern basieren, für das IoT-Gerät von einer Ausführungsvorrichtung mit einem Ausführungsspeicher erzeugt wird, und eine Verifikations- und Simulationsumgebung für das IoT-Gerät mithilfe des Ausführungsdatensatzes von einer Ausführungsvorrichtung erzeugt wird, und zumindest ein Anwendungsprogramm und zumindest ein Konfigurationsdatensatz aus einer Menge an Applikationsdaten, welche in einer Applikations-Datenbank gespeichert sind, mithilfe des Ausführungsdatensatzes von der Ausführungsvorrichtung ermittelt und aus der Applikations-Datenbank ausgelesen werden, in die Verifikations- und Simulationsumgebung eingebettet und miteinander verknüpft werden, wodurch der Programmcode erzeugt wird, und der Programmcode von der Verifikations- und Simulationsumgebung ausgeführt wird, und der Programmcode an eine Geräte-Plattform übermittelt wird, von dieser ausgeführt und das IoT-Gerät mit dem Programmcode angesteuert wird.

Dadurch wird auf eine effiziente Weise erreicht, dass ein individuell konfigurierter Programmcode erzeugt, geprüft und auf ein reales IoT-Gerät verteilt wird, sowie aus diesem IoT-Gerät ausgeführt wird, um beispielsweise eine Steuer- oder Datenerfassungsaufgabe auszuführen.

Die Anwendungs- und Geräte-Parameter für das IoT-Gerät können der Ausführungsvorrichtung manuell oder IT-gestützt bereitgestellt werden.

In einer Weiterbildung der Erfindung ist es vorgesehen, dass der Ausführungsdatensatz zumindest ein Informations-Element bezüglich des IoT-Geräts, ausgewählt aus der Gruppe, umfassend eine Betriebssystem-Information, eine Kommunikations-Information, Speicher-Information, Hardware-Information, eine Anwendungsprogramm-Information oder eine Peripherie-Information aufweist.

Durch einen derartigen Ausführungsdatensatz ist eine individuelle Konfiguration des IoT-Geräts mit sehr spezifischen Kennzahlen hinsichtlich der technischen Eigenschaften des I-oT-Geräts möglich.

In einer Weiterbildung der Erfindung ist es vorgesehen, dass die Geräte-Plattform in der Cloud, der Edge oder verteilt über Cloud und Edge liegt.

Durch die Einbeziehung der gewünschten Ausführungsumgebung in die Erzeugung des Programmcodes kann eine sehr stark angepasste, effiziente verbesserte Ausführung des Programmcodes erreicht werden.

In einer Weiterbildung der Erfindung ist es vorgesehen, dass die Applikations-Datenbank ferner zumindest einen Schnittstellen-Wandler umfasst, welcher von der Ausführungsvorrichtung ausgelesen wird, in die Verifikations- und Simulationsumgebung eingebettet wird und bei der Erzeugung des Programmcodes berücksichtigt wird.

Dadurch kann eine sehr hohe Kompatibilität mit bereits bekannten Applikationsprogrammen erreicht werden.

In einer Weiterbildung der Erfindung ist es vorgesehen, dass die Applikations-Datenbank zumindest ein Element in Form eines ausführbaren Programms aufweist.

Applikationsprogramme können beispielsweise in Form von Quellcodes oder ausführbarer Codes vorliegen. Ebenso können auch andere Software-Bibliotheken, wie dynamisch verknüpfte Programmbibliotheken herangezogen werden, welche Programmcode, Daten und Ressourcen in beliebiger Kombination enthalten können.

Durch die Verwendung von bereits ausführbaren Programmen kann eine sehr hohe Wiederverwendungsrate von bereits verfügbaren Applikationsprogrammen erreicht werden, sowie das Einbetten in die Verifikations- und Simulationsumgebung vereinfacht werden.

In einer Weiterbildung der Erfindung ist es vorgesehen, dass das IoT-Gerät von der Verifikations- und Simulationsumgebung bei der Ausführung des Programmcodes emuliert wird.

Dadurch wird eine sehr hohe Flexibilität Verifikations- und Simulationsumgebung unabhängig von der Zugänglichkeit oder Verfügbarkeit von IoT-Geräten erreicht.

In einer Weiterbildung der Erfindung ist es vorgesehen, dass das IoT-Gerät über die Geräte-Plattform und mittels eines Kommunikations-Tunnels mit der Verifikations- und Simulationsumgebung verbunden ist und bei der Ausführung des Programmcodes angesteuert wird.

Dadurch kann eine sehr sicherer Verifikations- und Simulationsumgebung erreicht werde, da einerseits Fehler eines Emulator-Modells vermieden werden, als auch Sicherheitsmerkmale der realen IoT-Geräte berücksichtigt werden können, wie echte Zertifikate oder Zugangseinrichtungen, wie Fingerabdrucklesegeräte integriert werden können.

Die erfindungsgemäße Aufgabe wird auch durch eine Vorrichtung eingangs genannter Art gelöst, wobei eine Ausführungsvorrichtung mit einem Ausführungsspeicher, eine Applikations-Datenbank und eine Geräte-Plattform umfasst sind, und die Ausführungsvorrichtung dazu eingerichtet ist, das erfindungsgemäße Verfahren auszuführen.

Die Erfindung wird nachfolgend anhand eines in der beigeschlossenen Zeichnung dargestellten Ausführungsbeispiels näher erläutert.

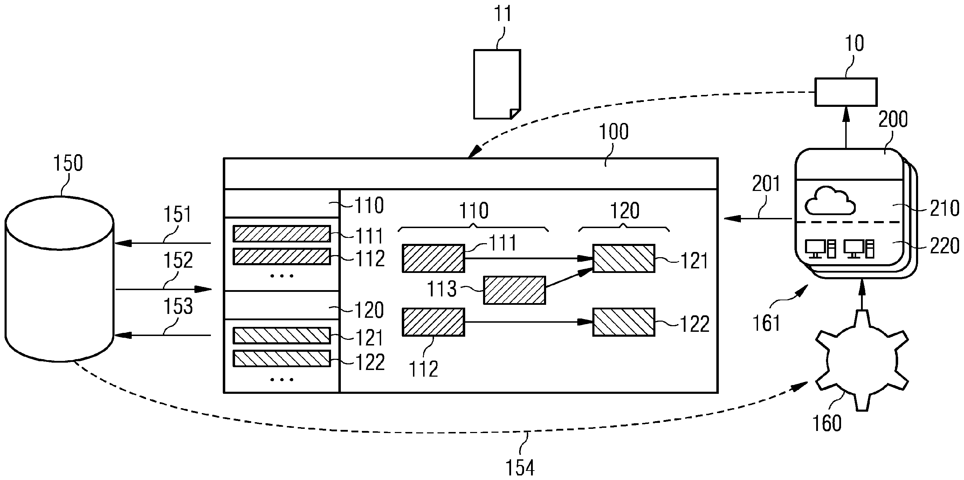

In der Figur ist eine schematische Darstellung des erfindungsgemäßen Verfahrens und Systems gezeigt.

Es wird zunächst ein Ausführungsdatensatz 11, welcher auf Anwendungs- und Geräte-Parametern basiert, für das IoT-Gerät 10 von einer Ausführungsvorrichtung mit einem Ausführungsspeicher erzeugt.

Ein gewünschter Programmcode 110 kann mittels einem Ziel-Datenformat 120 mit Ziel-Datenfeldern 121, 122 definieren, in welcher Form gewünschte Daten erzeugt werden sollen. Das Ziel-Datenformat 120 kann vom Ausführungsdatensatz 11 umfasst sein.

Dann wird eine Verifikations- und Simulationsumgebung 100 für das IoT-Gerät 10 mithilfe des Ausführungsdatensatzes 11 von einer Ausführungsvorrichtung, hier nicht gesondert dargestellt, erzeugt.

Die Verifikations- und Simulationsumgebung 100 kann eine Instanziierung der Anwendungen 111-113 vorsehen, das heißt eine Anwendung kann mehrfach in den gewünschten Programmcode eingebettet sein, möglicherweise unter Anwendung verschiedener Konfigurationen.

Beispielsweise kann die Verifikations- und Simulationsumgebung 100 individuell ein spezifisches Betriebssystem der Plattform und Leistungsparameter des IoT-Geräts beziehungsweise dessen Peripherie berücksichtigen. Diesbezügliche Meta-Informationen sind in dem Ausführungsdatensatz 11 verfügbar.

Mehrere Anwendungsprogramme 111-113 und Konfigurationsdatensätze werden aus einer Menge an Applikationsdaten, welche in einer Applikations-Datenbank 150 gespeichert sind, mithilfe des Ausführungsdatensatzes 11 von der Ausführungsvorrichtung im Schritt 151 ermittelt und aus der Applikations-Datenbank 150 im Schritt 152 ausgelesen.

Diese werden anschließend in die Verifikations- und Simulationsumgebung 100 eingebettet und miteinander verknüpft, wodurch in diesem Beispiel der gewünschte Programmcode 110 erzeugt wird.

Natürlich kann der Programmcode auch anders erzeugt werden, beispielsweise durch gemeinsames kompilieren oder kompilieren auf unterschiedlichen Plattformen.

Der Programmcode wird dann von der Verifikations- und Simulationsumgebung 100 ausgeführt, um beispielsweise Programmeigenschaften wie Performance, Stabilität, Datentypen, Ressourcennutzung oder die Kompatibilität interner und externer Schnittstellen und deren Datenflüsse zu testen beziehungsweise zu verifizieren.

In einem Ausführungsbeispiel der Erfindung kann das IoT-Gerät 10 von der Verifikations- und Simulationsumgebung 100 bei der Ausführung des Programmcodes emuliert werden.

Alternativ kann das IoT-Gerät 10 über die Geräte-Plattform 200 und mittels eines Kommunikations-Tunnels mit der Verifikations- und Simulationsumgebung 100 verbunden sein und bei der Ausführung des Programmcodes angesteuert werden.

Wenn das Ergebnis zufriedenstellend ist, kann der Programmcode an eine Geräte-Plattform 200 übermittelt werden und von dieser ausgeführt werden, wodurch das IoT-Gerät 10 mit dem Programmcode angesteuert wird.

Dabei kann der Programmcode mittels der Applikations-Datenbank 150 in dem Sinn übermittelt werden, als dass der neu erzeugte Programmcode zunächst in die Applikations-Datenbank 150 gespeichert wird (Schritt 153) und von dort aus gemäß Schritt 154 an eine Deployment-Pipeline 160 verteilt wird. Das Deployment auf das IoT-Gerät 10 beziehungsweise die Plattform 200 erfolgt im Schritt 161.

Ein Ausführungsdatensatz 11 weist ein oder mehrere Applikationsprogramme auf, welches beispielsweise bereits in anderen Systemen eingesetzt wird oder eine Applikation für unterschiedliche Systemkonfigurationen kompiliert wurde und als getrennte Applikationsprogramm gespeichert sind.

So kann ein und dieselbe Funktion zur Steuerung eines IoT-Geräts für eine unterschiedliche Anzahl von Prozessorkernen oder unterschiedliche Speichergrößen seitens eines Iot-Geräts optimiert sein. Ferner kann dieselbe Funktion für verschiedene Betriebssysteme oder Plattformen angepasst sein. Für Plattformen können die Applikationen verteilt über eine Cloud 210 und eine Edge 220, sowie jeweils spezifisch für die Cloud 210 oder die Edge 220 optimiert sein, je nach verwendetem IoT-Gerät oder auch Betriebs-Anforderungen können unterschiedliche Ausprägungen derselben Funktion optimiert sein und als getrennter Quellcode oder ausführbarer Code in der Applikations-Datenbank 150 gespeichert sein.

Der Ausführungsdatensatz 11 kann beispielweise ein Informations-Element bezüglich des IoT-Geräts 10, ausgewählt aus der Gruppe, umfassend eine Betriebssystem-Information, eine Kommunikations-Information, Speicher-Information, Hardware-Information, eine Anwendungsprogramm-Information oder eine Peripherie-Information aufweisen.

Die Betriebssystem-Information kann beispielsweise das IoT-Gerät 10, aber auch die Cloud 210 oder die Edge 220 betreffen.

Die Kommunikations-Information kann die Schnittstellen, die übertragenen Datenformate, Datenattribute oder Übertragungsparameter betreffen, sowohl zwischen einzelnen Anwendungsprogrammen in Sinne von Modulen, aber auch zu externen Diensten, mit denen das IoT-Gerät 10 kommuniziert. Die Kommunikations-Information kann auch zeitvariabel definiert werden.

Die Speicher-Information kann beispielsweise beschreiben, wieviel Speicher in welcher Art im IoT-Gerät 10, der Cloud 210 oder der Edge 220 zur Verfügung steht, beziehungsweise genutzt werden kann, unter Umständen zeitvariabel.

Die Hardware-Information kann beispielsweise beschreiben, wie viele Prozessorkerne zur Verfügung stehen, beziehungsweise genutzt werden können, unter Umständen zeitvariabel.

Die Anwendungsprogramm-Information kann beispielsweise beschreiben, dass einzelne Nutzer oder Nutzergruppen einen jeweils unterschiedlichen Funktionsumfang nutzen können.

Die Peripherie-Information kann beispielsweise beschreiben, dass die mit dem IoT-Gerät 10 verbundene Peripherie bestimmte Funktionen oder Ressourcen nutzen kann.

In der Applikations-Datenbank 150 gespeicherte Konfigurationsdaten können beispielsweise Konfiguration einzelner Funktionen, aber auch spezifischer Kombinationen mehrerer Funktionen unter Einbeziehung der vorher genannten Informationen enthalten.

Mit anderen Worten kann die Applikations-Datenbank 150 ein Element in Form eines ausführbaren Programms aufweisen.

Die Applikations-Datenbank 150 umfasst ferner einen oder mehrere Konfigurationsdatensätze zur Konfiguration des IoT-Geräts.

Die Applikations-Datenbank 150 kann ferner einen oder mehrere Schnittstellen-Wandler umfassen, welcher von der Ausführungsvorrichtung ausgelesen wird, in die Verifikations- und Simulationsumgebung 100 eingebettet wird und bei der Erzeugung des Programmcodes berücksichtigt wird.

Die Applikations-Datenbank 150 kann außerdem Container-Images oder Lösungsbeschreibungen umfassen.

### Bezugszeichenliste:

- 10: IoT-Gerät
- 11: Ausführungsdatensatz
- 200: Geräte-Plattform
- 201: Beschreibung laden
- 210: Cloud
- 220: Edge
- 100: Verifikations- und Simulationsumgebung
- 110: Applikations-Typ
- 111-113: Applikation, Programmcode-Sequenz
- 120: Ziel-Typ
- 121, 122: Steuer-Daten
- 150: Applikations-Datenbank
- 151, 153: Speichern in Applikations-Datenbank
- 152: Laden aus Applikations-Datenbank
- 154: Laden der Deployment-Daten
- 160: Deployment-Pipeline
- 161: Deployment auf IoT-Gerät

## Patentansprüche

1. Verfahren zur Ansteuerung eines IoT-Geräts (10) durch einen Programmcode, **dadurch gekennzeichnet, dass** ein Ausführungsdatensatz, welcher auf Anwendungs- und Geräte-Parametern basiert, für das IoT-Gerät (10) von einer Ausführungsvorrichtung mit einem Ausführungsspeicher erzeugt wird und, eine Verifikations- und Simulationsumgebung (100) für das IoT-Gerät (10) mithilfe des Ausführungsdatensatzes von einer Ausführungsvorrichtung erzeugt wird, und zumindest ein Anwendungsprogramm und zumindest ein Konfigurationsdatensatz aus einer Menge an Applikationsdaten, welche in einer Applikations-Datenbank (150) gespeichert sind, mithilfe des Ausführungsdatensatzes von der Ausführungsvorrichtung ermittelt und aus der Applikations-Datenbank (150) ausgelesen werden, in die Verifikations- und Simulationsumgebung (100) eingebettet und miteinander verknüpft werden, wodurch der Programmcode erzeugt wird, und der Programmcode von der Verifikations- und Simulationsumgebung (100) ausgeführt wird, an eine Geräte-Plattform (200) übermittelt wird, von dieser ausgeführt wird und das IoT-Gerät (10) mit dem Programmcode angesteuert wird.

2. Verfahren nach dem vorhergehenden Anspruch, wobei der Ausführungsdatensatz zumindest ein Informations-Element bezüglich des IoT-Geräts (10), ausgewählt aus der Gruppe, umfassend eine Betriebssystem-Information, eine Kommunikations-Information, Speicher-Information, Hardware-Information, eine Anwendungsprogramm-Information oder eine Peripherie-Information aufweist.

3. Verfahren nach einem der vorhergehenden Ansprüche, wobei die Geräte-Plattform (200) in der Cloud (210), der Edge (220) oder verteilt über Cloud und Edge (210, 220) liegt.

4. Verfahren nach einem der vorhergehenden Ansprüche, wobei die Applikations-Datenbank (150) ferner zumindest einen Schnittstellen-Wandler umfasst, welcher von der Ausführungsvorrichtung ausgelesen wird, in die Verifikations- und Simulationsumgebung (100) eingebettet wird und bei der Erzeugung des Programmcodes berücksichtigt wird.

5. Verfahren nach einem der vorhergehenden Ansprüche, wobei die Applikations-Datenbank (150) zumindest ein Element in Form eines ausführbaren Programms aufweist.

6. Verfahren nach einem der vorhergehenden Ansprüche, wobei das IoT-Gerät (10) von der Verifikations- und Simulationsumgebung (100) bei der Ausführung des Programmcodes emuliert wird.

7. Verfahren nach einem der Ansprüche 1 bis 5, wobei das IoT-Gerät (10) über die Geräte-Plattform (200) und mittels eines Kommunikations-Tunnels mit der Verifikations- und Simulationsumgebung (100) verbunden ist und bei der Ausführung des Programmcodes angesteuert wird.

8. Vorrichtung zur Ansteuerung eines IoT-Geräts (10) durch einen Programmcode, **dadurch gekennzeichnet, dass** eine Ausführungsvorrichtung mit einem Ausführungsspeicher, eine Applikations-Datenbank (150) und eine Geräte-Plattform (200) umfasst sind, und die Ausführungsvorrichtung dazu eingerichtet ist, das Verfahren nach einem der vorhergehenden Ansprüche auszuführen.
